Europäisches Patentamt

European Patent Office

Office européen des brevets

(19)

(11) Numéro de publication : **0 028 183**
**B1**

# (12) FASCICULE DE BREVET EUROPÉEN

(45) Date de publication du fascicule du brevet :
01.06.83

(21) Numéro de dépôt : **80401471.0**

(22) Date de dépôt : **16.10.80**

(51) Int. Cl.³ : **F 01 D 21/04**

(54) **Dispositif de rétention pour carter de compresseur d'une turbomachine.**

(30) Priorité : 23.10.79 FR 7926580

(43) Date de publication de la demande :
06.05.81 Bulletin 81/18

(45) Mention de la délivrance du brevet :
01.06.83 Bulletin 83/22

(84) Etats contractants désignés :
DE FR GB

(56) Documents cités :
FR A 1 421 189
FR A 2 018 042
GB A 868 197
GB A 1 078 157
GB A 1 466 385
US A 3 203 180
US A 3 298 248
US A 3 602 602

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Joubert, Raymond Jean Maurice**
**1, Allée Gustave Courbet Domaine de Grand Vau**
**F-91600 Savigny sur Orge (FR)**
Inventeur : **Soligny, Marcel Robert**
**136, Boulevard Jean Mermoz**
**F-94150 Chevilly-Larue (FR)**

(74) Mandataire : **Moinat, François et al**
**S.N.E.C.M.A. Service des Brevets Boîte Postale 81**
**F-91003 Evry Cedex (FR)**

Dispositif de rétention pour carter de compresseur d'une turbomachine

L'invention concerne un dispositif de rétention pour carter de compresseur d'une turbomachine à double flux constitué d'une virole métallique coaxiale à l'axe du compresseur et entourant le rotor, portant sur sa face interne en regard des extrémités d'aubes un matériau susceptible d'entrer en contact d'usure avec l'extrémité des aubes, la virole étant doublée extérieurement d'une structure annulaire coaxiale.

La rétention des fragments d'aubes susceptibles de s'échapper des rotors de turbomachine tournant à grande vitesse a nécessité la mise au point de dispositifs permettant l'évacuation de l'aube ou du fragment sans que celui-ci cause des avaries au restant de l'aubage. Les dispositifs connus ont pour but soit de retenir les fragments provenant de la rupture, soit de les fragmenter afin qu'ils puissent être évacués sans dommage.

Le brevet des Etats-Unis d'Amérique n° 3 241 813 décrit un dispositif de rétention de fragments de rotor de turbine. Un anneau formé dans un matériau résistant entoure le rotor et maintient un corps annulaire constitué d'un métal susceptible de résister à l'impact des fragments sans risque de rupture. Le corps annulaire présente, face aux aubes du rotor, un canal annulaire.

Une partie de l'énergie cinétique du fragment d'aube ou de l'aube éjectée est dissipée, lors de l'impact, par déformation ou rupture de l'anneau et le reste de l'énergie, par frottement de l'anneau et du corps annulaire dans le logement du carter où ils sont maintenus par serrage.

Dans une deuxième forme de réalisation décrite, le canal annulaire est garni intérieurement d'un matériau plus mou que celui du corps annulaire de manière à permettre aux fragments d'y pénétrer en perdant leur énergie et d'y être maintenus. Le matériau choisi est de l'aluminium.

Les dispositifs décrits sont efficaces mais présentent l'inconvénient d'être d'un poids assez important. En effet, les matériaux employés pour l'anneau et le corps annulaire sont généralement des aciers à haute résistance d'une épaisseur relativement importante. Il s'ensuit une augmentation de la masse de l'avion non négligeable. Le remplacement de l'acier par le titane, de masse spécifique plus faible, réduit la masse mais augmente les coûts de fabrication.

Le brevet français n° 1 604 806 décrit des structures résistant aux projectiles constituées de couches de matière fibreuse et de couches formées de pièces en matière rigide d'un indice de dureté au diamant dépassant 700. Ces pièces rigides sont des tiges ou des tubes à paroi épaisse, des billes, des graviers ou cailloux naturels. La densité des plaques ainsi obtenue est de l'ordre de 2,5. Les pièces rigides ont pour fonction non seulement de résister à l'action d'un projectile, mais également de le faire dévier et de provoquer sa rupture en fragments.

La réalisation de structure de rétention pour carter de compresseur basée sur les enseignements de ce dernier brevet n'est pas aisée à mettre en œuvre par suite de l'emploi de matériau rigide de très grande dureté. L'assemblage de ces éléments de blindage ne permet pas d'obtenir des couches cylindriques facilitant le déplacement du fragment d'aube ou de l'aube dans le matériau et l'absorption progressive de son énergie cinétique.

L'invention a pour but la réalisation d'un dispositif dont la structure est constituée d'un assemblage particulier de matériau dont au moins une partie est de faible densité.

Le dispositif de rétention selon l'invention, est caractérisé en ce que la structure annulaire coaxiale est constituée d'un empilement d'éléments de révolution coaxiaux à l'axe du compresseur, lesdits éléments étant composés au moins en partie d'anneaux circulaires réalisés en deux types de matériaux solides empilés alternativement dans le sens longitudinal de la turbomachine, la dimension desdits anneaux dans le sens longitudinal étant faible par rapport à leur dimension dans le sens radial.

Les explications et figures données ci-après à titre d'exemple permettront de comprendre comment l'invention peut être réalisée.

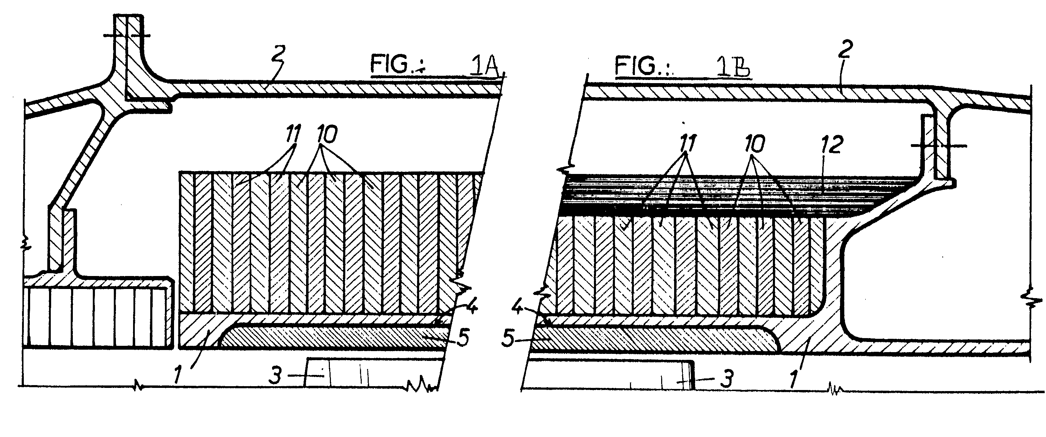

Les figures 1A et 1B montrent une forme de réalisation de l'invention.

Le dispositif de rétention pour carter de compresseur d'une turbomachine à double flux est constitué d'une virole métallique 1, de préférence en acier ou en titane, fixée à l'intérieur du carter de compresseur 2. En face des aubes 3 de compresseur, un évidement 4 de la virole 1 reçoit un matériau 5 susceptible de rentrer en contact d'usure avec l'extrémité des aubes et faisant office de joint d'étanchéité.

Sur son diamètre externe, la virole 1 est doublée d'une structure annulaire coaxiale constituée d'un empilement d'éléments de révolution coaxiaux à l'axe du compresseur.

Comme représenté aux figures 1A et 1B, les éléments de révolution sont constitués d'anneaux circulaires 10 et 11 coaxiaux à l'axe du compresseur empilés les uns sur les autres sur la surface latérale extérieure de la virole 1. Ces anneaux sont réalisés en deux types de matériaux empilés alternativement. Par exemple les anneaux 10 sont formés d'un matériau souple et déformable du type matériau fibreux, fibres de verre ou de carbone par exemple, lié par une résine polymérisable et les anneaux 11 par un matériau moins déformable du type métallique, bimétallique ou de type composite à hautes caractéristiques, par exemple bore-aluminium. Le choix des matériaux différents est fait dans chaque cas de manière à conjuguer les propriétés intéressantes des matériaux associés. Les anneaux sont collés ou vulcanisés les uns avec les autres.

La figure 1B montre en outre un bobinage 12, extérieur aux anneaux, constitué par exemple d'une fibre polyimide, noyée ou non dans une résine synthétique, qui maintient l'ensemble. En cas d'éjection d'aube ou de fragment de partie rotative du compresseur, l'impact du fragment sur le dispositif selon l'invention provoque une déformation de l'empilement se déforme à la manière d'un accordéon ou encore, vu en coupe, à la manière d'un éventail. L'énergie cinétique du fragment est ainsi partiellement absorbée par ce travail d'ouverture entre couches et par les frottements entre anneaux qui l'accompagnent. De plus, l'impact provoque une somme de déplacements élémentaires vers l'extérieur qui absorbent également l'énergie. Ces déplacements qui aboutissent à une expansion du dispositif également dans le sens radial sont rendus possibles grâce à l'espace ménagé entre le diamètre externe des anneaux 10 et 11 et le carter 2. Dans le cas où un bobinage 12 est adjoint, les anneaux 10 et 11 procurent une résistance à la perforation des fragments et absorbent l'énergie par leur mode particulier de déformations et le bobinage 12 procure un effet supplémentaire de rétention obtenu par répartition circonférentielle des efforts et des déplacements.

## Revendications

1. Dispositif de rétention pour carter de compresseur (2) d'une turbomachine à double flux constitué d'une virole métallique (1) coaxiale à l'axe du compresseur et entourant le rotor portant sur sa face interne en regard des extrémités d'aubes (3) un matériau (5) susceptible d'entrer en contact d'usure avec l'extrémité des aubes (3), la virole (1) étant doublée extérieurement d'une structure annulaire coaxiale, caractérisé en ce que la structure annulaire est constituée d'un empilement d'éléments de révolution coaxiaux à l'axe du compresseur, lesdits éléments étant composés au moins en partie d'anneaux circulaires (10, 11) réalisés en deux types de matériaux solides empilés alternativement dans le sens longitudinal de la turbomachine, la dimension desdits anneaux dans le sens longitudinal étant faible par rapport à leur dimension dans le sens radial.

2. Dispositif selon la revendication 1, caractérisé en ce que le diamètre intérieur des anneaux (10, 11) est approximativement égal au diamètre extérieur de la virole (1) et le diamètre extérieur des anneaux (10, 11) est notablement inférieur au diamètre intérieur du carter (2).

3. Dispositif selon la revendication 2, caractérisé en ce que les bords extérieurs des anneaux (10, 11) sont recouverts par un bobinage (12) de fibres noyées dans une résine synthétique polymérisable.

4. Dispositif selon une des revendications 1, 2 et 3, caractérisé en ce que les anneaux (10, 11) sont maintenus entre eux par collage.

5. Dispositif selon une des revendications 1, 2 et 3, caractérisé en ce que les anneaux (10, 11) sont maintenus entre eux par vulcanisation.

6. Dispositif selon l'une des revendications 1 à 5, caractérisé en ce que les anneaux sont constitués alternativement d'un matériau souple et déformable du type matériau fibreux lié par une résine polymérisable et d'un matériau moins déformable associé du type matériau métallique ou du type composite à hautes caractéristiques du genre bore-aluminium.

## Claims

1. Retaining device for the compressor housing (2) of a turbo-machine with twin flow comprising a metal annular member (1) coaxial with the axis of the compressor and surrounding the rotor, supporting on its internal face opposite to the ends of the blades (3) a material (5) capable of entering into wear contact with the ends of the blades (3), the annular member (1) being duplicated externally by a coaxial annular structure, characterized in this that the annular structure comprises a stack of bodies of revolution coaxial with the axis of the compress- or, the said bodies being composed at least in part of circular rings (10, 11) made in two types of solid materials stacked alternately in the longitudinal direction of the turbo-machine, the dimension of the said rings in the longitudinal direction being small in relation to their dimension in the radial direction.

2. Device according to claim 1, characterized in this that the internal diameter of the rings (10, 11) is approximately equal to the external diameter of the annular member (1) and the external diameter of the rings (10, 11) is substantially less than the internal diameter of the housing (2).

3. Device according to claim 2, characterized in this that the external edges of the rings (10, 11) are covered by a winding (12) of fibres embedded in a polymerisable synthetic resin.

4. Device according to one of claims 1, 2 and 3, characterized in this that the rings (10, 11) are held against one another by adhesive.

5. Device according to one of claims 1, 2 and 3, characterized in this that the rings (10, 11) are held against one another by vulcanisation.

6. Device according to one of claims 1 to 5, characterized in this that the rings (10, 11) are alternately constituted by a flexible and deformable material of fibrous material type connected by a polymerisable resin, and by a less deformable material associated therewith of metallic type or of composite type with high characteristics of the boron-aluminium kind.

## Ansprüche

1. Fangbandage für das Kompressorgehäuse (2) einer zweiflutigen Turbomaschine, bestehend aus einem koaxial zu der Achse des Kompressors liegenden und den Rotor umgebenden Metallring (1), der an seiner Innenseite den Enden der Schaufeln (3) gegenüberliegend ein Material (5) trägt, das mit dem Ende der Schaufeln (3) in Verschleißkontakt treten kann, wobei der Ring (1) auf der Außenseite mit einem koaxialen Ringmantel umkleidet ist, dadurch gekennzeichnet, daß der Ringmantel aus einem Paket von rotationssymmetrischen Elementen (10, 11) besteht, die koaxial zu der Kompressorachse liegen und zumindest teilweise als Kreisringe (10, 11) ausgeführt sind, die aus zwei Arten von festem Werkstoff hergestellt und in Längsrichtung der Turbomaschine wechselweise hintereinander angeordnet sind, und daß das Maß der genannten Ringe in Längsrichtung klein gegenüber ihrem Maß in radialer Richtung ist.

2. Fangbandage nach Anspruch 1, dadurch gekennzeichnet, daß der Innendurchmesser der Ringe (10, 11) ungefährgleich dem Außendurchmesser des Ringes (1) und der Außendurchmesser der Ringe (10, 11) erheblich kleiner ist als der Innendurchmesser des Gehäuses (2).

3. Fangbandage nach Anspruch 2, dadurch gekennzeichnet, daß die Außenränder der Ringe (10, 11) mit einer Bewicklung (12) aus in ein polymerisierbares Kunstharz eingebetteten Fasern bedeckt sind.

4. Fangbandage nach einem der Ansprüche 1, 2 oder 3, dadurch gekennzeichnet, daß die Ringe (10, 11) miteinander verklebt sind.

5. Fangbandage nach einem der Ansprüche 1, 2 oder 3, dadurch gekennzeichnet, daß die Ringe (10, 11) durch Vulkanisieren miteinander verbunden sind.

6. Fangbandage nach einem der Ansprüche 1 bis 5, dadurch gekennzeichnet, daß die Ringe (10, 11) abwechselnd aus einem weichen und verformbaren Material nach Art eines durch ein polymerisierbares Harz verbundenen Fasermaterials und einem weniger stark verformbaren Material in Verbindung mit einem metallischen Material oder einem hochwertigen Verbundmetall, etwa Bor-Aluminium, bestehen.

FIG.: 1A

FIG.: 1B

0 028 183